# EUROPÄISCHE PATENTANMELDUNG

(11) **EP 3 483 756 A1**
(43) Veröffentlichungstag der Anmeldung: **15.05.2019**
(21) Anmeldenummer: 18198868.4
(22) Anmeldetag: 05.10.2018
(51) Int. Cl.: G06F 17/50, H04L 12/26, G06F 3/048, G06F 16/28

(54) **CAD/CAM ANALYSE WERKZEUG MIT RÜCKVERBINDUNG ZU CAD/CAM DATEN**

(30) Priorität: 06.11.2017 DE 102017219631
(71) Anmelder: Heidelberger Druckmaschinen AG, 69115 Heidelberg (DE)
(72) Erfinder: Bolle, Hartwig, 67373 Dudenhofen (DE); Genthner, Werner, 64380 Roßdorf (DE); Ruppert, Christoph, 69168 Wiesloch (DE)

(57) **Zusammenfassung**

Die Erfindung betrifft ein Verfahren zur Visualisierung von Analyseergebnissen von CAD/CAM-Daten auf einem Bildschirm (10) mittels eines Rechnersystems (9), wobei in einem ersten Schritt (1) aus CAD/CAM-Daten mittels vordefinierter oder von einem Bediener zusammengestellter Regeln gezielt Berichtsdaten durch das Rechnersystem (9) extrahiert werden und in einem oder mehreren Berichten die extrahierten Berichtsdaten zusammengefasst und im Rechnersystem (9) abgelegt werden, wobei in einem zweiten Schritt die abgelegten extrahierten Berichtsdaten nach ebenfalls vordefinierten oder vom Benutzer gewünschten Regeln durch das Rechnersystem (9) analysiert und visuell (3a) zur Anzeige auf dem Bildschirm (10) und/oder zur Textsuche (3b) mittels Recherchewerkzeugen aufbereitet und im Rechnersystem (9) abgespeichert werden. Die Erfindung zeichnet sich dadurch aus, dass in einem dritten Schritt (4) die zur Visualisierung und/oder Textsuche aufbereiteten Berichtsdaten (3a, 3b) durch das Rechnersystem (9) mit den CAD/CAM-Daten in Beziehung gesetzt werden und Analyseergebnisse der visuellen Aufbereitung oder Textsuche mit den CAD/CAM-Daten verknüpft werden und eine entsprechende Darstellung der Verknüpfungsergebnisse auf dem Bildschirm (10) erfolgt.

## Beschreibung

Die vorliegende Erfindung betrifft ein Verfahren zur Visualisierung von Analyseergebnissen von CAD-/CAM-Daten auf einem Bildschirm mittels eines Rechnersystems, wobei in einem ersten Schritt aus CAD-/CAM-Daten mittels vordefinierter oder von einem Bediener zusammengestellter Regeln gezielt Berichtsdaten durch das Rechnersystem extrahiert werden und in einem oder mehreren Berichten die extrahierten Berichtsdaten zusammengefasst und im Rechnersystem abgelegt werden, wobei in einem zweiten Schritt die abgelegten extrahierten Berichtsdaten nach ebenfalls vordefinierten oder vom Benutzer gewünschten Regeln durch das Rechnersystem analysiert und visuell zur Anzeige auf dem Bildschirm und/oder zur Textsuche mittels Recherchewerkzeugen aufbereitet und im Rechnersystem abgespeichert werden.

Derartige gattungsgemäße Verfahren werden bei der Analyse von CAD-/CAM-Daten verwendet, um dem Benutzer gewünschte Informationen aus CAD-Zeichnungen und CAM-Dokumenten zugänglich zu machen. Dies geschieht mit einer Software, welche CAD-/CAM-Daten analysiert. Eine derartige Software wird von der Heidelberger Druckmaschinen AG unter dem Namen Heidelberg CAx Quality Manager angeboten. Die zusammengestellten Regeln oder vordefinierten Regeln sind dabei in einer sogenannten Big Data Check Suite mit fest vorgegebenen Standardchecks abgelegt. Mit dieser Check Suite kann der Benutzer gezielt nach bestimmten Informationen wie z. B. bestimmten Abmessungen in CAD-/CAM-Dateien suchen. Die Ergebnisse werden dann von der Software als Berichtsdaten in einem oder mehreren Berichten abgelegt. Dabei kann die Ablage der Berichtsdaten in einer oder mehreren Dateien, in einer oder mehreren Datenbanken oder in der Cloud erfolgen. Die Berichtsdateien werden in einem bestimmten Datenformat wie z. B. XML oder JSON erstellt. Bevor die extrahierten Berichtsdaten auf einem Bildschirm dargestellt oder zu einer Textsuche aufbereitet werden können, ist meist ein Zwischenschritt erforderlich, bei dem die extrahierten Berichtsdaten in ein entsprechendes Datenformat der Auswertesoftware zur Visualisierung und/oder Textsuche aufbereitet werden. Dazu verfügt die Software Heidelberg CAx Quality Manager über das Modul HQM Big Data Converter, mit dem die extrahierten Berichtsdaten in ein Format umgesetzt werden, das z. B. mit Microsoft Excel oder Microsoft Power BI grafisch aufbereitet werden kann. Die Textsuche findet mit Suchmaschinen wie z. B. Google oder ähnlichem statt.

Mit der visualisierten Darstellung auf dem Bildschirm oder der Aufbereitung zur Textsuche ist die Datenauswertung im Stand der Technik bisher abgeschlossen. In der Praxis möchte sich der Bediener jedoch gerne die ausgewerteten Ergebnisse direkt bezüglich ihrer Auswirkungen auf die Gegenstände der CAD-/CAM-Dateien anzeigen lassen. Dies ist bei der bisherigen Software Heidelberg CAx Quality Manager jedoch nicht möglich.

Es ist daher Aufgabe der vorliegenden Erfindung, ein Verfahren zur Visualisierung von Analyseergebnissen von CAD-/CAM-Daten zu schaffen, bei dem der Benutzer die Analyseergebnisse in unmittelbarem Zusammenhang mit den Bauteilen der CAD-/CAM-Daten sehen kann.

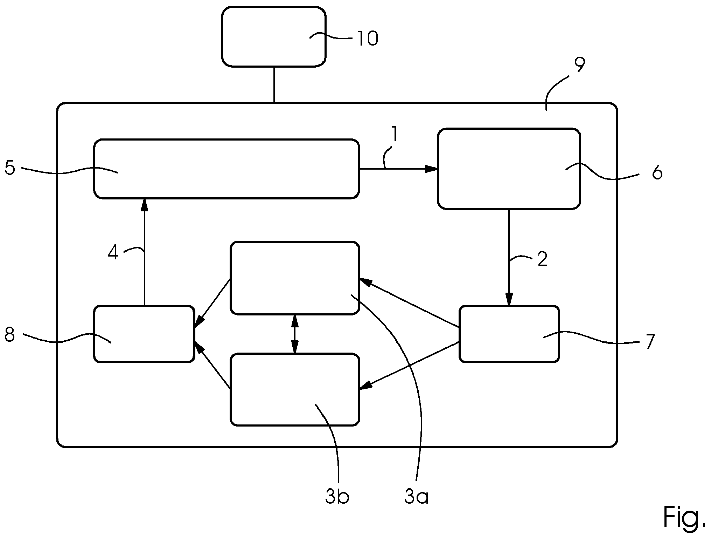

Diese Aufgabe wird erfindungsgemäß durch Patentanspruch 1 gelöst, vorteilhafte Ausgestaltungen der vorliegenden Erfindung ergeben sich aus den Unteransprüchen, der Beschreibung und der Figur.

Erfindungsgemäß verfügt das Verfahren zur Visualisierung über einen weiteren Verfahrensschritt, bei dem die zur Visualisierung und/oder Textsuche aufbereiteten Berichtsdateien durch einen Rechner mit den CAD-/CAM-Daten in Bezug gesetzt werden und so Analyseergebnisse der visuellen Aufbereitung oder Textsuche mit den CAD-/CAM-Daten verknüpft werden. Auf diese Art und Weise kann der Benutzer sich die Analyseergebnisse auf dem Bildschirm mit unmittelbarem Bezug zu den CAD-/CAM-Daten anzeigen lassen. Hat der Bediener z. B. einen Bericht ausgewählt, bei dem die CAD-/CAM-Dateien nach allen Bauteilen aus einem bestimmten Material angezeigt und ausgewertet werden, wird ihm auf dem Bildschirm nun jedes Bauelement aus dem vorgegebenen Material in den CAD-/CAM-Dateien z. B. rot markiert angezeigt. Auf diese Art und Weise erhält der Benutzer einen schnellen Überblick, welche Bauteile in den CAD-/CAM-Dateien aus dem von ihm vorgegebenen Material sind. Ebenso kann der Bediener Berichtsdaten dahingehend untersuchen lassen, wo Bauteile besonders häufig repariert werden. Nach den Vorgaben des Bedieners werden dann die CAD-/CAM-Bauteile rot markiert, welche häufig repariert werden. Der Bediener bekommt daher nicht nur wie beim Stand der Technik Auswertestatistiken angezeigt, in denen er einen statistischen Überblick über die betroffenen Bauteile erhält, er bekommt vielmehr die Möglichkeit, unmittelbar grafisch die tatsächlich betroffenen Bauteile mit einer entsprechenden Markierung im CAD-/CAM-System angezeigt zu bekommen. Auf diese Art und Weise wird der Kreislauf von der Auswertung der extrahierten Berichtsdaten zu den CAD-/CAM-Daten im CAD-/CAM-System geschlossen und für den Benutzer der direkte Link hergestellt.

In einer ersten Ausgestaltung der Erfindung ist vorgesehen, dass das Rechnersystem mehrere insbesondere durch ein Netzwerk verbundene Rechner aufweist. Das erfindungsgemäße Verfahren läuft in einem Rechnersystem ab, welches aus einem einzigen Rechner bestehen kann. In diesem Fall sind das CAD-/CAM-System, die Ablage der extrahierten Berichtsdaten, die Programme zur Datenanalyse und die Software zur Herstellung der Verlinkung zwischen den Analyseergebnissen und CAD-/CAM-Daten auf einem Rechner vorhanden. In der Praxis wird jedoch meistens jedoch zumindest das CAD-/CAM-System auf einem separaten Rechner vorhanden sein, während die extrahierten Berichtsdaten auf einem anderen Rechner, insbesondere in einer Datenbank oder der Cloud abgelegt sind. Auch die Auswertung und die Textsuche finden meist auf einem weiteren Rechner statt. In diesem Fall sind mindestens drei Rechner über ein Netzwerk wie ein Intranet oder das Internet miteinander verbunden. Dies bedeutet, dass die Rechner auch an unterschiedlichen Orten vorhanden sein können. Die Rechner müssen lediglich vernetzt sein, um so das Rechnersystem zu bilden.

Vorteilhafter Weise ist vorgesehen, dass die CAD-/CAM-Daten Bauteile oder Baugruppen für Maschinen beschreiben und dass in dem ersten Verfahrensschritt aus den CAD-/CAM-Daten Bauteilgrößen wie z. B. Bohrungsabmessungen, Gewindedaten, Gewichtsdaten, Toleranzen, Texte, Tabellen oder Stücklisten extrahiert werden. Die vorliegende Erfindung eignet sich insbesondere dazu, gezielt Informationen für Bauteile oder Baugruppen von komplexen Maschinen zu gewinnen. So weisen z. B. Druckmaschinen Tausende von mechanischen Bauteilen auf, welche alle über bestimmte Abmessungen, Gewindedaten, Gewichtsdaten, Toleranzen und Materialien verfügen. Um diese Bauteile oder Baugruppen bezüglich ihrer Eigenschaften gezielt gruppieren zu können, um so einen Überblick über die vielen Varianten von Bauteilen oder Baugruppen zu gewinnen, ist es vorteilhaft, bei der Extrahierung der Berichtsdaten nach konstruktiven Merkmalen wie Bohrungsabmessungen, Gewindedaten, Gewichtsdaten, Toleranzen oder sonstigen Beschreibungen zu durchsuchen. Die entsprechenden Berichtsdaten stehen dann zur Auswertung durch Analysewerkzeuge und Suchmaschinen zur Verfügung. Dadurch wird es in einem weiteren Verfahrensschritt möglich, die extrahierten Berichtsdaten visuell aufzubereiten und in Form von Tabellen oder Grafiken auf dem Bildschirm anzuzeigen. Weiterhin ist es möglich, alternativ oder zusätzlich die extrahierten Berichtsdaten einer Textsuche zuzuführen und so gezielt Informationen insbesondere aus Texten, Tabellen oder Stücklisten auf den CAD-Zeichnungen zu gewinnen.

In einer besonders vorteilhaften Ausgestaltung der vorliegenden Erfindung ist vorgesehen, dass bei den Berichtsdaten in jedem Verfahrenszustand ein Link im Rechnersystem abgespeichert wird, welcher die Herkunft der Berichtsdaten zu den CAD-/CAM-Daten enthält. Auf diese Art und Weise wird sichergestellt, dass zu jedem Zeitpunkt des erfindungsgemäßen Verfahrens die Berichtsdaten mit den ursprünglichen CAD-/CAM-Daten verknüpft sind, so dass die Auswerteergebnisse anschließend ebenfalls den jeweiligen CAD-/CAM-Daten zugeordnet werden können und der Kreis zu den CAD-/CAM-Daten geschlossen werden kann. So ist es möglich, dass das Rechnersystem auf die CAD-/CAM-Daten zugreift und eine Verbindung zwischen den zur visuellen Darstellung und /oder zur Textsuche aufbereiteten Berichtsdaten mit den Daten aus dem CAD-/CAM-System herstellt.

In einer weiteren Ausgestaltung der vorliegenden Erfindung ist vorgesehen, dass die Verbindung über einen Server des Rechnersystems erfolgt, der beim Start des CAD-/CAM-Systems mit den CAD-/CAM-Daten geladen wird und einen Zugriff auf die CAD-/CAM-Daten ermöglicht. In diesem Fall brauchen keine Links mit allen Berichtsdaten zu jedem Zeitpunkt des erfindungsgemäßen Verfahrens mitgeschrieben werden, es reicht aus, dass zu Beginn des Verfahrens mit dem ersten Zugriff auf die CAD-/CAM-Daten des CAD-/CAM-Systems gleichzeitig automatisch vom Rechnersystem ein Server gestartet wird, welcher die aufgerufenen CAD-/CAM-Dateien mitprotokolliert und zu jeder Zeit einen Zugriff auf die CAD-/CAM-Daten ermöglicht. Werden nach der Datenanalyse oder Textsuche Kommandos zum Zugriff auf die CAD-/CAM-Daten gegeben, so sorgt der Server dafür, dass diese Kommandos auf den passenden CAD-/CAM-Daten ausgeführt werden, die zu den Auswerteergebnissen passen.

Dabei ist in einer besonders vorteilhaften Ausgestaltung der Erfindung vorgesehen, dass im dritten Verfahrensschritt der Bediener über Bedienkommandos auf Basis der für die Visualisierung und/oder Textsuche aufbereiteten Berichtsdaten die Darstellung der CAD-/CAM-Daten auf dem Bildschirm ändert. Auf diese Art und Weise können z. B. alle Bauelemente oder Baugruppen in den CAD-/CAM-Daten bunt markiert werden, in denen eine Bohrung mit einem bestimmten Durchmesser vorhanden ist. Ein anderes Bedienkommando ist das Hineinzoomen in entsprechende CAD-/CAM-Daten oder die Anzeige von häufig ausgetauschten oder reparierten Bauelementen, wenn die Abfrage gezielt auf die Häufigkeit des Austauschs oder der Reparatur von Bauelementen abgezielt hat.

Die vorliegende Erfindung wird nachfolgend anhand einer Figur näher beschrieben und erläutert. Die Figur zeigt:
Eine Übersicht über alle an dem erfindungsgemäßen Verfahren zur Visualisierung von Analyseergebnissen von CAD-/CAM-Daten beteiligten Software- und Hardwarekomponenten.

In der Figur läuft das erfindungsgemäße Verfahren zur Visualisierung von Analyseergebnissen von CAD-/CAM-Daten auf mehreren Rechnern ab, welche über ein Netzwerk miteinander verbunden sind. So ist ein Rechner 5 mit Analyse- und Reportingwerkzeugen mit Zugriff auf CAD-/CAM-Dateien vorhanden, in dem auch die CAD-/CAM-Dateien abgespeichert sind. Dieser Rechner 5 verfügt über eine Software, welche die CAD-/CAM-Dateien nach vom Benutzer vorgegebenen Regeln oder Standardregeln durchsuchen kann und so Berichte für Baugruppen, -teile und Zeichnungen erstellen kann. Eine derartige Software vertreibt die Heidelberger Druckmaschinen AG unter dem Namen Heidelberg CAx Quality Manager, welche entsprechende Analyse- und Reportingwerkzeuge enthält, die native CAD-/CAM-Daten extrahieren kann und entsprechende Berichtsdaten in einem ersten Schritt 1 erzeugen kann. In dem nächsten Schritt 1 werden diese extrahierten Berichtsdaten z. B. in einer Datenbank auf einem weiteren Rechner 6 zur Datenablage abgelegt. Die Berichtsdaten werden dabei bevorzugt in den Datenformaten XML oder JSON abgelegt. Auf einem weiteren Rechner ist ein Datenkonvertierungstool 7 vorhanden, mit dem extrahierten Berichtsdaten des Rechners 6 in Formate zur Auswertung durch Software wie Microsoft Excel oder Microsoft Power BI umgewandelt werden. Dazu werden die Berichtsdaten z. B. aus dem Format XML in das Format CSV konvertiert. In diesem Schritt 2 bei der Datenaufbereitung und Umwandlung in geeignete Big Data Analyseformate findet eine reine Datenkonversion statt. Die eigentliche Analyse wird dann in den Schritten 3a und 3b vorgenommen, wo z. B. mit Microsoft Excel eine visuelle Darstellung auf einem Bildschirm 10 erfolgt. Die Schritte 3a und 3b können auf einem weiteren separaten Rechner des Rechnersystems neu durchgeführt werden, sie können aber auch auf dem Rechner 5 oder Rechner 6 durchgeführt werden. Dabei werden die Daten grafisch aufbereitet und z. B. in Microsoft Excel-Tabellen und -Grafiken angezeigt. Ebenso ist eine grafische Darstellung von Analysen in Microsoft Power BI möglich. In dem Schritt 3b werden die Daten so aufbereitet, dass sie zur interaktiven und maschinellen Weiterverarbeitung bei der Textsuche geeignet sind. Dazu können die Daten in Datenbanken übertragen werden und in einer Suchmaschine wie Google verarbeitet werden.

Erfindungsgemäß ist es möglich, dass die Ergebnisse der Datenanalyse und Auswertung in Bezug auf die eigentlichen CAD-/CAM-Daten des CAD/CAM-Systems in einem weiteren Schritt 4 dargestellt werden. Dieser Schritt 4 umfasst Bedienkommandos, wie CAD-/CAM-Daten laden, vergrößern oder verkleinern, farbig markieren und insbesondere Bauelemente oder Baugruppen darzustellen, welche häufig repariert oder ausgetauscht werden müssen. Dazu ist eine Software 8 vorgesehen, welche als Gateway zur Verlinkung analysierter Daten mit den Ausgangsdaten aus dem CAD-/CAM-System dient. Auf diese Art und Weise können die ausgewerteten Daten direkt im CAD-/CAM-System zur weiteren Bearbeitung und Sichtung durch andere Mitarbeiter zur Verfügung gestellt werden.

Dies geschieht in der Figur dadurch, dass bei der Auswertung der Berichtsdateien http-Links generiert werden und in den Auswertungen angezeigt werden. Der Link enthält eine URL mit wichtigen Informationen wie z. B. Host Name und Port-Nummer, dies ist der Rechner 5, auf dem die CAD-/CAM-Daten interaktiv gesichtet oder bearbeitet werden sollen, sowie Informationen zur Baugruppe oder dem Objekt, welches geladen oder bearbeitet werden soll. Darin sind Informationen enthalten, welche sich auf den Applikationsmodus wie z. B. 3D-Modellierung oder 2D-Zeichnung beziehen. Ebenso enthält der Link Informationen, welches Objekt angezeigt, vergrößert oder verkleinert dargestellt, markiert oder bearbeitet werden soll. Daneben enthält der Link Informationen zu dem CAD-/CAM-System z.B. NX vom Hersteller Siemens, welches auf die Daten zugreift. Die Daten liegen dabei in einem Dateisystem oder in einem PLM System wie TeamCenter oder SAP PLM. Dabei werden sogenannte Teamcenter angegeben, wenn die Daten im System "Teamcenter" des Herstellers Siemens verwaltet werden. Wenn Daten aus SAP verwendet werden, werden Informationen über die CAD-/CAM-Schnittstelle ECtr/FCtr in SAP verwaltet.

Der Gateway 8 zur Verlinkung analysierter Daten mit Ausgangsdaten enthält mehrere Softwarekomponenten. Zum einen internen Webserver, welcher den zuvor beschriebenen http-Link entgegennimmt und auswertet. Zum anderen einen Client, welcher per Remote-Verbindung mit einer laufenden CAD-/CAM-Sitzung kommuniziert und so jederzeit den Status der laufenden CAD-/CAM-Sitzung überwacht. Zusätzlich wird eine DLL-Datei "HQM Remote Server" für das CAD-System in NX des Herstellers Siemens verwendet, welches einen Server beinhaltet, der beim Start des CAD-Systems mit geladen wird und so einen Remote-Zugriff auf die CAD-/CAM-Sitzung per http ermöglicht. Dabei nimmt der Gateway 8 über den internen Webserver den Link entgegen, wertet ihn aus und übergibt die auszuführenden Kommandos an den internen Client. Der Client im Gateway 8 kontaktiert den in der CAD-/CAM-Sitzung laufenden Serverteil "HQM Remote Server" und erhält so Remote-Zugriff auf die laufende CAD-/CAM-Sitzung. Der Client kann dann Kommandos zum Öffnen des Bauteils, Wechseln des Moduls (3D zu 2D oder umgekehrt), Zoom-Funktion, Auswahlfunktion, Änderungsfunktion, Markierungsfunktion etc. in den Objekten der CAD-/CAM-Dateien ausführen. Auf diese Art und Weise ermöglicht der Gateway 8 die unmittelbare Verlinkung der Ergebnisse der visuellen Auswertung oder Textsuche in Suchmaschinen in den Schritten 3a und 3b mit den CAD-/CAM-Daten.

### Bezugszeichenliste

- 1: Analyse- und Reportingverfahren zur Extrahierung von CAD/CAM-Daten
- 2: Datenaufbereitung und Umwandlung in geeignete Big-Data-Analyseformate
- 3a: visuelle Darstellung ausgewerteter Daten
- 3b: Aufbereitung der ausgewerteten Daten für Recherchesysteme auf Textbasis
- 4: Darstellung oder Korrektur der analysierten Daten im CAD/CAM-System
- 5: Rechner mit Analyse- und Reportingwerkzeug mit Zugriff auf CAD/CAM-Datei
- 6: Rechner zur Datenablage
- 7: Datenkonvertierungstool
- 8: Gateway zur Verlinkung analysierter Daten mit Ausgangsdaten aus dem CAD/CAM-System
- 9: Rechnersystem
- 10: Bildschirm

## Patentansprüche

1. Verfahren zur Visualisierung von Analyseergebnissen von CAD/CAM-Daten auf einem Bildschirm (10) mittels eines Rechnersystems (9), wobei in einem ersten Schritt (1) aus CAD/CAM-Daten mittels vordefinierter oder von einem Bediener zusammengestellter Regeln gezielt Berichtsdaten durch das Rechnersystem (9) extrahiert werden und in einem oder mehreren Berichten die extrahierten Berichtsdaten zusammengefasst und im Rechnersystem (9) abgelegt werden, wobei in einem zweiten Schritt die abgelegten extrahierten Berichtsdaten nach ebenfalls vordefinierten oder vom Benutzer gewünschten Regeln durch das Rechnersystem (9) analysiert und visuell (3a) zur Anzeige auf dem Bildschirm (10) und/oder zur Textsuche (3b) mittels Recherchewerkzeugen aufbereitet und im Rechnersystem (9) abgespeichert werden,
**dadurch gekennzeichnet,**
**dass** in einem dritten Schritt (4) die zur Visualisierung und/oder Textsuche aufbereiteten Berichtsdaten (3a, 3b) durch das Rechnersystem (9) mit den CAD/CAM-Daten in Beziehung gesetzt werden und Analyseergebnisse der visuellen Aufbereitung oder Textsuche mit den CAD/CAM-Daten verknüpft werden und eine entsprechende Darstellung der Verknüpfungsergebnisse auf dem Bildschirm (10) erfolgt.

2. Verfahren nach Anspruch 1,
**dadurch gekennzeichnet,**
**dass** zwischen dem ersten (1) und dem zweiten Verfahrensschritt (3a, 3b) ein weiterer Verfahrensschritt (2) vorgesehen ist, bei dem die extrahierten Berichtsdaten mittels eines Datenkonverters im Rechnersystem (9) für die nachfolgenden Verfahrensschritte bearbeitet werden.

3. Verfahren nach einem der vorhergehenden Ansprüche,
**dadurch gekennzeichnet,**
**dass** nach dem ersten Verfahrensschritt (1) die extrahierten Berichtsdaten in einer Datei, einer Datenbank oder in einer Cloud abgespeichert werden.

4. Verfahren nach einem der vorhergehenden Ansprüche,
**dadurch gekennzeichnet,**
**dass** das Rechnersystem (9) mehrere insbesondere durch ein Netzwerk verbundene Rechner aufweist.

5. Verfahren nach einem der vorhergehenden Ansprüche,
**dadurch gekennzeichnet,**
**dass** die CAD/CAM-Daten Bauteile oder Baugruppen für Maschinen beschreiben und dass in dem ersten Verfahrensschritt (1) aus den CAD/CAM-Daten Bauteilgrößen wie z. B. Bohrungsabmessungen, Gewindedaten, Gewichtsdaten, Toleranzen, Texte, Tabellen oder Stücklisten extrahiert werden.

6. Verfahren nach einem der vorhergehenden Ansprüche,
**dadurch gekennzeichnet,**
**dass** bei dem zweiten Verfahrensschritt (3a) der visuellen Aufbereitung die Berichtsdaten in Form von Tabellen oder Grafiken auf dem Bildschirm (10) angezeigt werden.

7. Verfahren nach einem der vorhergehenden Ansprüche,
**dadurch gekennzeichnet,**
**dass** bei den Berichtsdaten in jedem Verfahrenszustand ein Link im Rechnersystem (9) abgespeichert wird, welcher die Herkunft der Berichtsdaten aus den CAD/CAM-Daten enthält.

8. Verfahren nach einem der vorhergehenden Ansprüche,
**dadurch gekennzeichnet,**
**dass** im dritten Verfahrensschritt (4) das Rechnersystem (9) auf die CAD/CAM-Daten zugreift und die Verbindung zwischen den zur visuellen Darstellung (3a) und/oder zur Textsuche (3b) aufbereiteten Berichtsdaten mit dem CAD/CAM-System herstellt.

9. Verfahren nach Anspruch 8,
**dadurch gekennzeichnet,**
**dass** die Verbindung über einen Server des Rechnersystems (9) erfolgt, der beim Start des CAD/CAM-Systems mit den CAD/CAM Daten geladen wird und einen Zugriff auf die CAD/CAM Daten ermöglicht.

10. Verfahren nach Anspruch 9,
**dadurch gekennzeichnet,**
**dass** der Link des Servers durch das Rechnersystem (9) ausgewertet wird und mit auszuführenden Kommandos zum Zugriff auf die CAD/CAM-Daten verbunden wird.

11. Verfahren nach einem der vorhergehenden Ansprüche,
**dadurch gekennzeichnet,**
**dass** im dritten Verfahrensschritt (4) der Bediener über Bedienkommandos auf Basis der für die Visualisierung (3a) und/oder Textsuche (3b) aufbereiteten Berichtsdaten die Darstellung der CAD/CAM Daten auf dem Bildschirm (10) ändert.
